# EUROPEAN PATENT APPLICATION

(11) **EP 3 680 290 A1**
(43) Date of publication of application: **15.07.2020**
(21) Application number: 18852582.8
(22) Date of filing: 31.08.2018
(51) Int. Cl.: C08L 1/10, C08B 3/12, C08B 15/08, C08J 7/04, C08L 23/00, C08L 67/00, C08L 77/00, D01F 2/00

(54) **CELLULOSE NANOFIBER LIQUID DISPERSION, CELLULOSE NANOFIBER COMPOSITE RESIN, AND METHODS FOR PRODUCING DISPERSION AND RESIN**

(30) Priority: 04.09.2017 JP 2017169271
(71) Applicant: The Japan Steel Works, Ltd., Tokyo 141-0032 (JP)
(72) Inventor: ISHIGURO Ryo, Hiroshima-shi Hiroshima 736-8602 (JP); NAKAMURA Satoru, Hiroshima-shi Hiroshima 736-8602 (JP)
(74) Representative: Grünecker Patent- und Rechtsanwälte PartG mbB
(86) International application number: PCT/JP2018/032495
(87) International publication number: WO 2019/045076

(57) **Abstract**

Provided are: a cellulose nanofiber liquid dispersion containing 0.01-30 wt% of a chemically-modified cellulose, 0.01-20 wt% of a surfactant, and 50-99.8 wt% of a dispersion solvent, wherein the chemically-modified cellulose is a fine powder which has undergone half-esterification to modify a hydroxy group contained in the cellulose with a dibasic acid anhydride, and the surfactant is at least one selected from surfactants that have a surface tension of 70 mN/m or less as measured by the Wilhelmy method, and that result in a contact angle of 90° or less between droplet and solid surface; a cellulose nanofiber composite resin; and production methods for the cellulose nanofiber liquid dispersion and the cellulose nanofiber composite resin.

## Description

### TECHNICAL FIELD

The present invention relates to a cellulose nanofiber dispersion, a cellulose nanofiber composite resin and methods for producing the cellulose nanofiber dispersion and the cellulose nanofiber composite resin. Particularly, by using this dispersion, it is possible to improve the strength or heat resistance of various products produced by an injection machine or an extruder, and to improve the strength and heat resistance of various resin products.

### BACKGROUND ART

In recent years, in order to improve the properties of resin products, research and development regarding the compounding of fibers and resins has been conducted. For example, in order to improve the strength, proposals have been made regarding the compounding of glass fibers and resins (Patent Literature 1). In addition, when an inorganic filler such as a glass fiber is compounded with a resin, the strength and rigidity are greatly improved. However, since the glass fiber itself has a large specific gravity, the product has a large weight, and that makes it difficult to apply thereof to automotive parts and the like that require lightweight. Therefore, a synthetic fiber such as aramid, acrylic, and rayon, which has a lower specific gravity than the glass fiber, is compounded with the resin, to achieve light weight, though there remains a problem that the improvement of mechanical strength and rigidity is insufficient. Further, since the diameter of these fibers is about 20 µm, when these fibers are applied to film products, which become thinner, the fiber diameter is larger than the film thickness, resulting in forming of unevenness, and problems of defects in thickness are caused.

Therefore, in recent years, plant fibers that are abundant in nature and have a low specific gravity have been attracting attention, and among these, cellulose nanofibers (CeNF) produced from plants such as conifers, broadleaf trees, and bamboo have attracted attention. Since CeNF is derived from a plant, it is a material, like a paper, having a low environmental load and excellent recyclability. In addition, CeNF has properties of a linear thermal expansion coefficient, indicating a degree of shrinkage due to a temperature change, as low as that of the glass fiber, and a high elastic modulus. Therefore, in recent years, CeNF has been produced from plants, and research for using this has been actively conducted.

For example, research in the field of food packaging materials, which are products that require high barrier properties, is included. So far, metallic can products and glass bottle products have been used as packaging materials with gas barrier property. However, in recent years, due to a high environmental load of these products, replacement with paper and plastics-based products has been progressing. For example, in the field of packaging materials, when a multilayer structure including a gas barrier layer is required, a method of providing a gas barrier layer containing CeNF subjected to an ultraviolet irradiation treatment on a paper substrate has been proposed (Patent Literature 2 and Patent Literature 3).

Since CeNF itself has a structure having hydroxyl groups, it is highly hydrophilic, and once it is dried, the nanofibers are strongly aggregated by hydrogen bonding. Therefore, a CeNF dispersion slurry that has been subjected to a physical or chemical defibration treatment in an aqueous medium is generally produced. CeNF in this dispersion slurry is generally subjected to a method of adding and impregnating cellulose fibers such as pulp into water, and then subjecting the cellulose fibers to a defibration treatment by a mechanical treatment. As a method of subjecting the CeNF surface to a chemical modification treatment, proposed are a method of reducing the number of hydroxyl groups by chemically modifying a part or all of hydroxyl groups on the CeNF surface with a modifying group (Patent Literature 4), and a method of improving uniform dispersibility in a polyolefin resin by subjecting a part of hydroxyl groups to a polybasic acid monoesterification treatment (Patent Literature 5).

Examples of a method for producing CeNF include physical methods and chemical methods. First, examples of the physical methods include methods using a high-pressure homogenizer, a ball mill, and a stone mill (Patent Literature 6 and Patent Literature 7).

In addition, as the chemical methods, studies are conducted on a method in which 2,2,6,6-tetramethylpiperidine-1-oxyl radical (TEMPO),which is an organic solvent, and a cellulose are subjected to a TEMPO catalytic oxidation reaction, and the hydroxyl groups on the CeNF surface with micro-sized fiber width are converted into carboxyl groups to form Na salts, causing interaction between electrostatic repulsion and osmotic pressure effect among CeNFs in water, and defibration can be achieved by a light mechanical treatment. (Patent Literature 8).

When using the CeNF, the compatibility with CeNF becomes a problem. Since CeNF has hydroxyl groups derived from cellulose molecules, the fiber surface has hydrophilic properties. Therefore, when CeNF is added as a reinforcing material to resins such as a plastic, the compatibility is poor, and CeNFs aggregate. Thus, chemically modifying the CeNF surface with hydrophobic groups enables to greatly improve the dispersion state in hydrophobic plastic or oil.

A CeNF dispersion can be kneaded with a resin in a kneading device such as a twin-screw extruder, to obtain pellets or sheets in which CeNF and the resin are compounded. The pellets are applied as raw materials to an injection molding machine, a blower or the like, so that it is possible to obtain a product in which CeNF and a resin are compounded. The produced sheets can be made into a film with a drawing machine and the film can be applied to non-aqueous secondary battery separators or high-barrier films. Among these, particularly the non-aqueous secondary battery separators are required to have improved heat resistance and strength properties for improving the safety of the battery. In the present invention, application to a method for producing a general non-aqueous secondary battery separator will be described as an example.

Generally, methods for producing a lithium ion battery separator are roughly classified into a dry method and a wet method. In the wet method, a plasticizer such as liquid paraffin and a polyolefin resin are melt-kneaded using a continuous kneader represented by a well-known extruder and formed into a sheet by a T-die. The sheet is formed into a film by a sequential stretching method or a simultaneous biaxial stretching method with a stretching device or the like, and the liquid paraffin is removed with an extraction solvent such as dichloromethane. Thereafter, micropores closed in the extraction step are reopened using a horizontal stretching machine or a simultaneous biaxial stretching machine, and heat fixing is performed to remove residual stress during the stretching. The separator obtained by this method has properties of high wettability and high liquid retention of an electrolyte, and has less possibility of causing an internal short circuit of the battery even when lithium dendrite is deposited. However, this method also has disadvantages of high cost due to necessity to use a solvent when extracting and removing the plasticizer, and limit on the line speed due to time consuming in the degreasing process.

Unlike the wet method, as the dry method, proposed is a uniaxial stretching method to form micropores, in which a crystalline polyolefin resin is melted and extruded, a sheet is produced by cooling and solidifying with a high draft ratio, and the sheet is stretched in a machine direction, (Patent Literature 9 and Patent Literature 10). Since the microporous film obtained by this method does not use a plasticizer, no extraction solvent is required, the cost is lower than that of the wet method, and high-speed molding is possible. However, since the wettability and liquid retention of the electrolyte are poor and the strength in a width direction is low, there is a disadvantage that longitudinal tearing occurs when forming the battery. In addition, as the dry method, a porous method using a crystal form called β crystal of polypropylene has been proposed.

Crystalline forms of crystalline polypropylene (PP) include α crystals, β crystals, γ crystals, α crystals, and smectic crystals produced when molten polypropylene is quenched. It is known that under normal crystallization conditions, the most stable α crystal is produced, but β crystals are formed when molten polypropylene is crystallized under a temperature gradient or when a small amount of nucleating agent (hereinafter referred to as β crystal nucleating agent) is added and mixed. It is known that this β crystal has properties of a melting point and a density lower than those of the α crystal, and of a crystal state or fracture state different from that of the α crystal. In addition, it is known that the β crystal undergoes a crystal transition to a stable α crystal due to thermal and mechanical factors, and by stretching, the β crystal is transitioned to the α crystal and a crack is formed. Currently, a method for producing a microporous film utilizing this crystal transition has already been patented (Patent Literature 11, Patent Literature 12, and Patent Literature 13). Low cost microporous film obtained by this method can be possible by using a general film forming device and stretching apparatus. However, there is a problem that a crystal control method is difficult and shapes of the micropores are not uniform.

When a dispersion according to the present invention is used, adding the CeNF subjected to a hydrophobic treatment and a surfactant enables to shorten the defibration treatment time, which has been a problem until now.

### Citation List

### Patent Literature

Patent Literature 1: JP-A-2004-269579
Patent Literature 2: JP-A-2012-76231
Patent Literature 3: JP-A-2016-11392
Patent Literature 4: JP-A-2014-74145
Patent Literature 5: JP-A-2015-65829
Patent Literature 6: JP-A-2016-30809
Patent Literature 7: JP-A-2016-132241
Patent Literature 8: JP-A-2008-308802
Patent Literature 9: JP-A-2014-77127
Patent Literature 10: JP-A-2014-40231
Patent Literature 11: JP-A-H09-176352
Patent Literature 12: JP-A-H06-100720
Patent Literature 13: JP-A-H09-255804

### SUMMARY OF INVENTION

### TECHNICAL PROBLEM

As described above, defibration treatment methods for CeNF are roughly classified into physical defibration treatment methods and chemical defibration treatment methods.

First, in a physical defibration treatment method represented by a stone mill method, a homogenizer treatment, or a ball mill treatment, in order to make fiber diameters of CeNF uniform, it is necessary to increase the number of times of defibration treatment. These physical defibration treatment methods are methods for promoting defibration by adding shearing or collision to the added cellulose raw material. The fibers obtained by this method are non-uniform and thus require multiple treatments. However, when an excessive shearing force is applied to reduce the number of times of defibration treatment, the fiber is damaged and the fiber length is shortened, which may hinder the improvement of properties.

Moreover, in order to improve the defibration efficiency, a method has been proposed in which CeNF subjected to chemical modification treatment is added to a medium to swell. In this method, since the medium penetrates between the hydrogen bonds of CeNF by swelling, the efficiency in defibration is improved. However, the chemical defibration treatment method has a problem that continuous treatment is difficult because it takes time for the cellulose raw material and the medium to penetrate. For example, a long time is needed for the medium to penetrate to the center of CeNF, and even when a pressure is applied, it is still difficult to swell in a short time.

In addition, the chemical defibration treatment method using a TEMPO catalyst provides higher uniformity and finer CeNF than the physical defibration treatment method. However, the price of the TEMPO catalyst is high, and thus the price of the CeNF dispersion is also high. Further, the reaction between the TEMPO catalyst and the cellulose raw material needs a long time, and thus continuous production is difficult.

The present invention is made in view of the above problems, and an object thereof is to provide a cellulose nanofiber dispersion having a large defibration degree (rate, effect) and excellent dispersibility particularly by adding a specific surfactant into a medium in which a specific chemically modified cellulose is dispersed, a cellulose nanofiber composite resin using the cellulose nanofiber dispersion, and methods for producing the cellulose nanofiber dispersion and the cellulose nanofiber composite resin.

### SOLUTION TO PROBLEM

One embodiment of the present invention is a cellulose nanofiber dispersion including: a chemically modified cellulose in an amount of 0.01 wt% to 30 wt%; a surfactant in an amount of 0.01 wt% to 20 wt%; and a dispersion medium in an amount of 50 wt% to 99.8 wt%, in which
the chemically modified cellulose is a finely powdered and chemically modified cellulose subjected to a semi-esterification treatment, in which a hydroxyl group contained in the cellulose is modified with a dibasic acid anhydride, and
the surfactant is at least one selected from surfactants having a surface tension of 70 m·N/m or less measured by a Wilhelmy method and a contact angle between a droplet and a solid surface of 90° or less.

In one embodiment of the invention, the chemically modified cellulose may be further subjected to an alkylene oxide treatment.

In one embodiment of the invention, the chemically modified cellulose preferably has an average fiber diameter of 3 nm to 200 nm.

In one embodiment of the invention, the dispersion medium is preferably tap water containing calcium of 1 mg/l to 400 mg/l and magnesium of 1 mg/l to 400 mg/l and having a pH of 4 to 8, or pure water.

In one embodiment of the invention, the dispersion medium is preferably an organic solvent having a molecular weight of 30 to 100 and a boiling point of 50°C to 300°C.

In one embodiment of the invention, the dispersion medium is preferably an oil having a viscosity of 2,000,000 mPa·s or less.

One embodiment of the present invention is related to a method for producing a cellulose nanofiber dispersion, including:
a step of obtaining a chemically modified cellulose by subjecting a cellulose to a semi-esterification treatment; and
a dispersing step of subjecting a composition containing the chemically modified cellulose in an amount of 0.01 wt% to 30 wt%, a surfactant in an amount of 0.01 wt% to 20 wt%, and a dispersion medium in an amount of 50 wt% to 99.8 wt% to a defibration treatment, in which
the cellulose has an average fiber diameter of 20 µm to 70 µm, and
the surfactant is at least one selected from surfactants having a surface tension of 70 m·N/m or less measured by a Wilhelmy method and a contact angle between a droplet and a solid surface of 90° or less.

One embodiment of the present invention is related to a cellulose nanofiber composite resin, including:
the chemically modified cellulose contained in the cellulose nanofiber dispersion; and
at least one resin selected from a polyolefin resin, a polyvinyl resin, a polyamide resin, a polyester resin, and a biodegradable resin, wherein
a content of the chemically modified cellulose is 40 wt% or less.

One embodiment of the present invention is related to a method for producing a cellulose nanofiber composite resin, comprising:
a step of coating or kneading the cellulose nanofiber dispersion onto a surface of at least one resin selected from a polyolefin resin, a polyvinyl resin, a polyamide resin, a polyester resin, and a biodegradable resin; and
a step of removing the dispersion medium by devolatilization or degreasing, in which a content of the chemically modified cellulose is 40 wt% or less.

### ADVANTAGEOUS EFFECTS OF INVENTION

Since the cellulose nanofiber dispersion and the cellulose nanofiber composite resin according to the present invention are composed as described above, the following effects can be obtained.

That is, the defibration treatment is performed on a composition in which a specific surfactant is added to a cellulose subjected to a semi-esterification treatment by a chemical modification treatment and a medium, so that a cellulose nanofiber dispersion that has been sufficiently efficiently subjected to the defibration treatment can be obtained compared to a case of not adding the surfactant. In addition, when the cellulose nanofiber composite resin, which is produced using this dispersion, is used, there is an effect that the strength properties and the quality of the film can be improved.

### BRIEF DESCRIPTION OF DRAWINGS

[Fig. 1] Fig. 1 is a schematic cross-sectional view schematically showing a cellulose composite resin according to Example 1.
[Fig. 2] Fig. 2 is a diagram showing sedimentation states of dispersions produced in Examples 1 and 2 and Comparative Examples 1 and 2 after 72 hours.
[Fig. 3] Fig. 3 is a diagram showing SEM images of microporous films produced in Examples 1 and 2 and Comparative Examples 1 and 2.
[Fig. 4] Fig. 4 is a diagram showing an SEM image of a microporous film formed in Comparative Example 6.

### DESCRIPTION OF EMBODIMENTS

Hereinafter, an embodiment of the present invention will be described in detail.

The term "cellulose" in the embodiment of the present invention refers to a polymer compound in which a large number of glucoses are bonded by β-1,4-glycosidic bonds, and means that hydroxyl groups bonded to carbon atoms at the 2nd, 3rd and 6th positions in a glucose ring of a cellulose are unsubstituted. In addition, the term "a hydroxyl group contained in a cellulose" refers to a hydroxyl group bonded to carbon atoms at the 2nd, 3rd and 6th positions in the glucose ring of the cellulose.

The term "chemically modified cellulose" refers to a product in which a hydroxyl group contained in the cellulose is chemically modified, and a hydrogen atom of the hydroxyl group is substituted with a substituent.

### [Cellulose Nanofiber Dispersion]

The cellulose nanofiber dispersion according to the embodiment of the present invention is a cellulose nanofiber dispersion containing: a chemically modified cellulose in an amount of 0.01 wt% to 30 wt%; a surfactant in an amount of 0.01 wt% to 20 wt%; and a dispersion medium in an amount of 50 wt% to 99.8 wt%, in which
the chemically modified cellulose is a finely powdered and chemically modified cellulose subjected to a semi-esterification treatment of modifying a hydroxyl group contained in a cellulose with a dibasic acid anhydride, and
the surfactant is at least one selected from surfactants having a surface tension of 70 m·N/m or less measured by a Wilhelmy method and a contact angle between a droplet and a solid surface of 90° or less.

When a resin and the cellulose nanofiber dispersion according to the embodiment of the present invention are compounded into a resin by kneading or coating, the strength properties and heat resistance of the resin can be improved, and the strength and heat resistance of various resin products can be improved.

### <Chemically Modified Cellulose>

The chemically modified cellulose according to the embodiment of the present invention is subjected to a semi-esterification treatment, in which a hydroxyl group contained in a cellulose is modified with a dibasic acid anhydride, and is a finely powdered and chemically modified cellulose.

In the cellulose nanofiber dispersion according to the embodiment of the present invention, the content of the chemically modified cellulose is 0.01 wt% to 30 wt%. When the content of the chemically modified cellulose is less than 0.01 wt%, sufficient strength cannot be obtained when the chemically modified cellulose is applied to a CeNF composite resin. The content of the chemically modified cellulose is preferably 1 wt% or more, and more preferably 3 wt% or more, from the viewpoint of strength when the chemically modified cellulose is applied to the CeNF composite resin. When the content of the chemically modified cellulose is more than 30 wt%, there are problems that the viscosity of the dispersion increases, uniform dispersion cannot be attained, or the dispersion solidifies. The content of the chemically modified cellulose is preferably 10 wt% or less, and more preferably 5 wt% or less, from the viewpoint of the viscosity, dispersibility, workability, etc. of the dispersion.

The finely powdered and chemically modified cellulose is a finely powdered and chemically modified cellulose in which the cellulose is chemically modified by a semi-esterification treatment and defibrated.

In the finely powdered and chemically modified cellulose, the chemically modified cellulose has preferably nano-sized average fiber diameter. Specifically, from the viewpoint of dispersibility of the chemically modified cellulose in the dispersion, the chemically modified cellulose has an average fiber diameter of preferably 200 nm or less, more preferably 100 nm or less, still more preferably 50 nm or less, and even more preferably 30 nm or less. In addition, from the viewpoints of heat resistance and strength when it being made into a cellulose nanofiber composite resin, the chemically modified cellulose has an average fiber diameter of preferably 3 nm or more, more preferably 5 nm or more, and still more preferably 10 nm or more. The average fiber diameter of the chemically modified cellulose can be measured by a method described in Examples, and may be calculated by observing an image of a scanning electron microscope (SEM) and adding and averaging measured values obtained by measuring fiber diameters at 200 locations.

The cellulose (cellulose raw material) according to the embodiment of the present invention maybe in any state, such as in a state of being combined with lignin or hemicellulose produced from wood or plants. The cellulose raw material can be used even when it is a crystalline cellulose or pulp.

The average fiber diameter of the cellulose raw material is generally 1 µm or more, for example, preferably 5 µm or more, more preferably 10 µm or more, and still more preferably 20 µm or more. In addition, the average fiber diameter of the cellulose raw material is preferably, for example, 500 µm or less, more preferably 300 µm, still more preferably 100 µm or less, and even more preferably 70 µm or less. The average fiber diameter of the cellulose raw material can be measured by a method described in Examples, and may be calculated by observing an image of a scanning electron microscope (SEM) and adding and averaging measured values obtained by measuring fiber diameters at 200 locations.

The semi-esterification treatment refers to a chemical defibration treatment in which a cellulose is caused to react with a dibasic acid anhydride to esterify at least a part of hydroxyl groups contained in the cellulose and carboxyl groups are introduced (chemical modification) to make a cellulose ester (chemically modified cellulose).

With the semi-esterification treatment, at least a part of the hydroxyl groups on the fiber surface of the cellulose are chemically modified, so that hydrogen bonds between cellulose fibers are broken, the chemically modified cellulose is efficiently defibrated, and high dispersibility is obtained.

As for the semi-esterification treatment, common esterification methods can be used, and the degree of esterification may be adjusted using a catalyst such as a TEMPO catalyst (2,2,6,6-tetramethylpiperidine 1-oxyl) if necessary.

In the case of using a catalyst, a reaction product treated with a catalyst may be subjected to a semi-esterification treatment or a secondary chemical modification treatment. However, in the case of using a catalyst such as a TEMPO catalyst, the cost of the dispersion is high, so that celluloses subjected to a semi-esterification treatment or subjected to a semi-esterification treatment and then an alkylene oxide treatment are suitable.

The dibasic acid anhydride is preferably a dibasic carboxylic acid anhydride. Examples thereof include acetic anhydride, succinic anhydride, phthalic anhydride, maleic anhydride, and benzoic anhydride. Succinic anhydride is preferred from the viewpoint of the modification property to cellulose and the defibrating property. These dibasic carboxylic acid anhydrides can be used alone or in combination of two or more thereof.

The average degree of esterification of the chemically modified cellulose is preferably 0.1 or more, more preferably 0.1 to 2.5, still more preferably 0.5 to 2.5, and particularly preferably 1.0 to 2.5. The average degree of esterification is the average number of esterified hydroxyl groups per glucose, which is a basic structural unit of cellulose, and can be measured by a method such as using gas chromatograph.

The degree of esterification of the chemically modified cellulose can be evaluated by the acid value of the cellulose ester, and the acid value can be measured by a common method. For example, the degree of esterification can be measured by a method based on JIS K2501 "Acid value titration evaluation method".

The acid value of the chemically modified cellulose is more preferably 20 or more, and still more preferably 40 or more. In addition, the acid value of the chemically modified cellulose is preferably 50 or more, more preferably 60 or more, and still more preferably 70 or more.

The chemically modified cellulose may be further subjected to an alkylene oxide treatment.

Here, "further subjected to an alkylene oxide treatment" refers to that the cellulose is subjected to an alkylene oxide treatment after being subjected to the semi-esterification treatment.

The alkylene oxide treatment is a treatment in which the chemically modified cellulose, obtained by subjecting the cellulose to the semi-esterification treatment, and an alkylene oxide are reacted.

By subjecting the cellulose to the semi-esterification treatment and then the alkylene oxide treatment, the hydrogen atom of the hydroxyl group remaining in the chemically modified cellulose after the semi-esterification treatment is substituted (chemically modified) with a hydrophobic group, and thus a chemically modified cellulose having higher hydrophobicity is obtained.

Examples of the alkylene oxide to be used in the alkylene oxide treatment include ethylene oxide, propylene oxide, butylene oxide, pentylene oxide, hexylene oxide, heptylene oxide, octylene oxide, nonylene oxide, and decylene oxide. These alkylene oxides can be used alone or in combination of two or more thereof.

With the alkylene oxide treatment, an alkyl ether group corresponding to the alkylene oxide used in the chemically modified cellulose after the semi-esterification treatment is introduced.

In the chemically modified cellulose, the hydroxyl group in any part of the chemical modified cellulose only have to be esterified. Preferably, the hydroxyl group may be further etherified by an alkylene oxide treatment, and the chemically modified cellulose may be composed of the same type of repeating unit, or may be composed of a plurality of types of repeating units. In addition, the chemically modified cellulose does not need to be esterified and etherified in one repeating unit.

### <Surfactant>

The surfactant according to the embodiment of the present invention is at least one selected from surfactants having a surface tension of 70 m·N/m or less measured by a Wilhelmy method and a contact angle between a droplet and a solid surface of 90° or less.

In the cellulose nanofiber dispersion according to the embodiment of the present invention, the content of the surfactant is 0.01 wt% to 20 wt%. When the content of the surfactant is less than 0.01 wt%, there are problems such that the dispersibility of CeNF is deteriorated, CeNF is not sufficiently defibrated and variation in the fiber diameter occurs. As a result, when a CeNF composite resin is made, it cannot have a sufficient strength. The content of the surfactant is preferably 0.05 wt% or more, and more preferably 0.1 wt% or more, from the viewpoints of improving the dispersibility of CeNF and making the CeNF easily to have fiber diameter in a preferred range. When the content of the surfactant is more than 20 wt%, during the production of the dispersion, bubbles are generated, the liquid feeding becomes difficult and workability is lowered. The content of the surfactant is preferably 5 wt% or less, and more preferably 3 wt% or less, from the viewpoint of preventing the generation of bubbles in the dispersion and improving the workability.

The cellulose nanofiber dispersion according to the embodiment of the present invention can be used by adding it to a resin. However, when the surface tension of the cellulose nanofiber dispersion is significantly different from the surface tension of the resin, the cellulose nanofiber dispersion is separated in the resin, and uniform dispersion becomes difficult. Therefore, the surface tension of the surfactant according to the embodiment of the present invention is preferably smaller than the surface tension of the general-purpose resin.

The surface tension of the surfactant according to the embodiment of the present invention is 70 m·N/m or less, and is, from the viewpoint of improving the dispersing and permeating effect, preferably 60 m·N/m or less, and more preferably 40 m·N/m or less. The lower limit of the surface tension of the surfactant is not particularly limited, and only have to be 0 m N/m or more.

The surface tension of the surfactant can be measured by methods such as a Wilhelmy method, a ring method, and a hanging drop method.

The surfactant according to the embodiment of the present invention has a contact angle between a droplet and a solid surface of 90° or less. That is, when a droplet of the surfactant is dropped on the solid surface, the contact angle of the surfactant to the solid surface is 90° or less, and is, from the viewpoint of the permeation of the medium, preferably 45° or less, and more preferably 30° or less. The lower limit of the contact angle is not particularly limited, and only have to be 0° or more.

The contact angle between the surfactant according to the embodiment of the present invention and the solid surface can be measured by a tangent method, and can be measured, for example, using a contact angle meter such as a dynamic contact angle measuring device (DCA-100W) manufactured by AND Corporation.

Further, the dispersion according to the embodiment of the present invention can be coated to a resin product, a metal product, and the like. However, if a surfactant having a large contact angle is selected when it is added, the coating layer may be peeled off from the surface of the product to which it was coated. Therefore, it is preferable that the contact angle of the surfactant to be added is 90° or less at which the coating property is generally stabilized.

The surfactant in the embodiment of the present invention may be any of an anionic surfactant, a cationic surfactant, an amphoteric surfactant, a nonionic surfactant and the like, or may be used in combination of two or more types.

As the surfactant according to the embodiment of the present invention, it is preferable to select a surfactant having a thermal decomposition temperature higher by at least 20°C than the melting point of the resin.

Examples of the anionic surfactant include: sulfate ester anionic surfactants such as alkyl sulfate ester salts, alkenyl sulfate ester salts, polyoxyalkylene alkyl ether sulfate ester salts, and polyoxyalkylene alkenyl ether sulfate ester salts; sulfonic acid anionic surfactants such as alkylbenzene sulfonates, sulfosuccinic acid alkyl ester salts, polyoxyalkylene sulfosuccinic acid alkyl ester salts, secondary alkyl sulfonates, α-olefin sulfonic acids, α-sulfo fatty acid ester salt, acyl isethionate, and N-acyl-N-methyl taurate; carboxylic acid anionic surfactants such as fatty acid salts, ether carboxylates, alkenyl succinates, and N-acyl amino acid salts; and phosphate ester anionic surfactants such as alkyl phosphate ester salts and polyoxyalkylene alkyl ether phosphate ester salts.

Examples of the cationic surfactant include quaternary ammonium salts, pyridinium salts, and tertiary amine or secondary amine mineral acid salts or organic acid salts having a hydrocarbon group with 12 or more and 28 or less carbon atoms which may be separated by an amide group, an ester group or an ether group. Examples of the amphoteric surfactant include alkyl carbo betaines, alkyl sulfo betaines, alkyl hydroxy sulfo betaines, alkyl amido hydroxy sulfo betaines, alkyl amido amine-type betaines, alkyl imidazoline-type betaines, alkyl amidopropyl betaines, alkyl hydroxy sulfo betaines, coconut oil fatty acid hydroxy sulfo betaine, lauryl hydroxy sulfo betaine, myristyl hydroxy sulfo betaine, palm oil fatty acid amido propyl betaine, betaine-type acetates such as lauryl dimethyl amino acetate betaine, N-fatty acid acyl - N - carboxymethyl - N - hydroxyethylethylenediamine salt, and N-fatty acid acyl-L-alginate salt.

Examples of the nonionic surfactant include: polyoxyethylene ether ester nonionic surfactants such as polyoxyethylene hydrogenated castor oil, polyoxyethylene castor oil, polyoxyethylene sorbitan fatty acid ester, polyoxyethylene sorbitol fatty acid ester, polyoxyethylene glycerin fatty acid ester, oxyethylene chain-type surfactants, sorbitan ester-type surfactants, glyceride (glycerin (mono, di) fatty acid esters)-based surfactants, 12-hydroxystearic acid ester, propylene glycol fatty acid ester, sucrose fatty acid ester, alkyl glyceryl ether, alkyl glucoside, and polyoxyethylene fatty acid; polyoxyethylene ether nonionic surfactants such as polyoxyethylene alkyl ethers and polyoxyethylene alkyl phenyl ethers; polyhydric alcohol fatty acid ester nonionic surfactants such as sorbitan fatty acid ester, sucrose fatty acid ester, glycerin fatty acid ester, and polyglycerin fatty acid ester; polyhydric alcohol alkyl ether nonionic surfactants such as alkyl glycosides; and nitrogen-containing nonionic surfactants such as fatty acid monoalkanolamide, polyoxyethylene alkylamine, and alkylpolyoxyethylene fatty acid amides.

Examples of the amphoteric surfactant include lecithin.

As the surfactant according to the embodiment of the present invention, a surfactant having a surface tension of 70 m·N/m or less measured by the Wilhelmy method and a contact angle between a droplet and a solid surface of 90° or less can be appropriately selected from those listed above for use, and it is preferable that the surface tension is 70 m·N/m or less and the contact angle is 90° or less at 23 ± 2°C and relative humidity 50 ± 5%.

Examples of the surfactant according to the embodiment of the present invention include, among these, lecithin (surface tension: 2 m·N/m, contact angle: 22°), alkyl sulfate ester salts (surface tension: 50 m N/m, contact angle: 30°), and polyoxyethylene alkylamine (surface tension: 10 m·N/m, contact angle: 40°), and imidazoline, and alkyl sulfate ester salts are preferred. Alkyl sulfate ester salts are surfactants derived from vegetable oils such as coconut oil having 12 to 18 carbon atoms.

### <Dispersion Medium>

In the cellulose nanofiber dispersion according to the embodiment of the present invention, the content of the dispersion medium is 50 wt% or more, preferably 60 wt% or more, and more preferably 70 wt% or more. In addition, the content of the dispersion medium is 99.8 wt% or less, preferably 99 wt% or less, and more preferably 98 wt% or less.

The dispersion medium to be used in the CeNF dispersion may be any of water, an organic solvent, an oil having a molecular weight of 100 to 2,000 or less, or a mixture thereof.

As the water, tap water containing calcium in an amount of 1 mg/l to 400 mg/l and magnesium in an amount of 1 mg/l to 400 mg/l and having a pH of 4 to 8, or pure water may be used.

The organic solvent is preferably an organic solvent having a molecular weight of 30 to 100 and a boiling point of 50°C to 300°C.

Examples of the organic solvent include acetone, isobutyl alcohol, isopropyl alcohol, isopentyl alcohol, ethyl ether, ethylene glycol monoethyl ether, ethylene glycol monoethyl ether acetate, ethylene glycol mono-normal-butyl ether, ethylene glycol monomethyl ether, ortho-dichlorobenzene, xylene, cresol, chlorobenzene, isobutyl acetate, isopropyl acetate, isopentyl acetate, ethyl acetate, normal-butyl acetate, n-propyl acetate, normal-pentyl acetate, methyl acetate, cyclohexanol, cyclohexanone, 1,4-dioxane, dichloromethane, N,N-dimethylformamide, styrene, tetrachloroethylene, tetrahydrofuran, 1,1,1-trichloroethane, toluene, normal hexane, 1-butanol, 2-butanol, methanol, methyl isobutyl ketone, methyl ethyl ketone, methyl cyclohexanol, methyl cyclohexanone, methyl normal-butyl ketone, chloroform, carbon tetrachloride, 1,2-dichloroethane, 1,2-dichloroethylene, 1,1,2,2-tetrachloroethane, trichloroethylene, carbon disulfide, 2-butanol normal hexane isopentyl alcohol, 1,2-dichloroethylene (also known as acetylene dichloride), 1,2-dichloroethane (also known as ethylene dichloride), and diethyl ether.

Among these, preferred are N,N-dimethylformamide, 2-butanol normal hexane isopentyl alcohol (also known as isoamyl alcohol), 1,2-dichloroethylene (also called acetylene dichloride), cyclohexanone, 1,2-dichloroethane (also called ethylene dichloride), carbon disulfide, acetone, isobutyl alcohol, isopropyl alcohol, isopentyl alcohol, diethyl ether, ethylene glycol monoethyl ether (also known as cellosolve), ethylene glycol monomethyl ether (also known as methyl cellosolve), ethyl acetate, methyl acetate, 1,4-dioxane, dichloromethane (also known as methylene dichloride), tetrahydrofuran, toluene, normal hexane, 1-butanol, 2-butanol, methanol, methyl isobutyl ketone, and methyl ethyl ketone, and more preferred are 1,2-dichloroethane, carbon disulfide, acetone, isobutyl alcohol, isopropyl alcohol, isopentyl alcohol, diethyl ether, ethylene glycol monoethyl ether, ethylene glycol monomethyl ether, ethyl acetate, methyl acetate, 1,4-dioxane, dichloromethane, tetrahydrofuran, toluene, n-hexane, 1-butanol, 2-butanol, methanol, methyl isobutyl ketone, and methyl ethyl ketone.

Examples of the oil include gasoline, coal tar naphtha, petroleum ether, petroleum naphtha, petroleum benzine, turpentine oil, mineral spirit, liquid paraffin, and industrial lubricating oil. These organic solvents above and these oils can be used alone or in combination of two or more thereof.

However, the organic solvent or oil used as the medium in the dispersion in the embodiment of the present invention can be added to the resin. Therefore, when the boiling point of the organic solvent or oil greatly deviates from the molding temperature of the resin, stable molding is difficult. Therefore, the boiling point of the organic solvent or oil to be used in the present invention is preferably within a range that does not deviate significantly from the molding temperature of the resin. Therefore, the boiling point of these media is preferably in the range of 50°C to 450°C, more preferably in the range of 50°C to 400°C, and most preferably in the range of 50°C to 300°C. In addition, the higher the viscosity of the oil used as the medium, the more difficult it is to inject the oil into the device. Therefore, the oil to be used in the present invention is preferably an oil having a viscosity of 2,000,000 mPa·s or less, more preferably an oil having a viscosity of 1,000,000 mPa·s or less, and still more preferably an oil having a viscosity of 500,000 mPa·s or less, which can be fed by a general pump. As the lower limit of the viscosity, an oil having a viscosity of 2 mPa·s or more is preferred, an oil having a viscosity of 5 mPa·s or more is more preferred, and an oil having a viscosity of 8 mPa·s or more is still more preferred. The oil used as the medium is particularly preferably liquid paraffin.

The cellulose nanofiber dispersion according to the embodiment of the present invention may contain various additives such as an antioxidant, if necessary, in addition to the cellulose nanofiber, the surfactant, and the dispersion medium.

The use of the cellulose nanofiber dispersion according to the embodiment of the present invention is not particularly limited. For example, it can be used as a reinforcing material for any resin material, and is preferably used for a CeNF composite resin to be described later. The cellulose nanofiber dispersion can be kneaded with any resin and formed into pellets, sheets, films and the like. In addition, the cellulose nanofiber dispersion may be coated to the surface of any resin. The cellulose nanofiber dispersion can be applied to a non-aqueous secondary battery separator or a high barrier film. Among these, in order to improve the safety of the battery, the cellulose nanofiber dispersion is also suitable for use in a non-aqueous secondary battery separator that particularly requires improvements in heat resistance and strength properties.

The cellulose nanofiber dispersion can be kneaded with a resin in a kneading device such as a twin-screw extruder, so as to obtain a cellulose nanofiber composite resin in pellet, sheet, or film form in which CeNF and the resin are compounded.

The cellulose nanofiber dispersion according to the embodiment of the present invention is preferably produced by the following production method.

### [Method for Producing Cellulose Nanofiber Dispersion]

The method for producing the cellulose nanofiber dispersion according to the embodiment of the present invention includes:
a step of obtaining a chemically modified cellulose by subjecting a cellulose to a semi-esterification treatment; and
a dispersing step of dispersing a composition containing the chemically modified cellulose in an amount of 0.01 wt% to 30 wt%, a surfactant in an amount of 0.01 wt% to 20 wt%, and a dispersion medium in an amount of 50 wt% to 99.8 wt%, in which
the cellulose has an average fiber diameter of 20 µm to 70 µm, and
the surfactant is at least one selected from surfactants having a surface tension of 70 m·N/m or less measured by a Wilhelmy method and a contact angle between a droplet and a solid surface of 90° or less.

The above description can be applied to the cellulose nanofiber dispersion, the semi-esterification treatment, the chemically modified cellulose, the surfactant, and the dispersion medium according to the embodiment of the present invention.

The step of obtaining the chemically modified cellulose is performed by subjecting the cellulose to the semi-esterification treatment.

As described above, the semi-esterification treatment refers to a chemical defibration treatment in which a cellulose is caused to react with a dibasic acid anhydride to esterify at least a part of hydroxy groups contained in the cellulose, and carboxyl groups are introduced (chemical modification) to make a cellulose ester (chemically modified cellulose) o.

The semi-esterification treatment method is not particularly limited, and a method of mixing a dibasic acid anhydride and a cellulose can be used. At that time, if necessary, a catalyst or a medium may be used, and stirring or kneading may be performed.

In order to promote the reaction, the reaction temperature in the semi-esterification treatment is preferably 60°C or higher, more preferably 80°C or higher, and still more preferably 100°C or higher. In addition, from the viewpoint of thermal degradation of the cellulose, the reaction temperature is preferably 180°C or lower, more preferably 160°C or lower, and still more preferably 150°C or lower.

The reaction time in the semi-esterification treatment can be appropriately selected depending on the type and amount of the dibasic acid anhydride, the reaction temperature, and the like, and is preferably 1 minute or longer, preferably 3 minutes or longer, and more preferably 5 minutes or longer, in order to sufficiently esterify the hydroxyl group of the cellulose. In addition, from the viewpoint of production efficiency, the reaction time is preferably 6 hours or shorter, preferably 4 hours or shorter, and more preferably 2 hours or shorter. When the reaction time is in the above range, the dibasic acid anhydride permeates among the cellulose fibers, the semi-esterification reaction proceeds, and the defibration degree is improved.

Stirring may be stirring using a magnetic stirrer or a stirring blade that is generally used in a chemical reaction. In addition, the stirring may be performed continuously or intermittently.

The kneading can be performed by a common kneading method. Examples of the common kneading method include a method using a mixing roller, a kneader, a Banbury mixer, an extruder (such as a single-screw or twin-screw extruder), and the like.

The amount of the dibasic acid anhydride to be used in the semi-esterification treatment can be selected within a range where a desired acid value can be obtained. The amount is, for example, preferably 5 parts by mass or more, more preferably 10 parts by mass or more, still more preferably 25 parts by mass or more, and even more preferably 40 parts by mass or more with respect to 100 parts by mass of the cellulose, from the viewpoints of reaction rate, productivity and cost. In addition, the amount is preferably 70 parts by mass or less, more preferably 60 parts by mass or less, and still more preferably 55 parts by mass or less, from the viewpoint of cost.

The step of obtaining the chemically modified cellulose may further include an alkylene oxide treatment.

Here, "further subjected to an alkylene oxide treatment" refers to that the cellulose is reacted with an alkylene oxide after being subjected to the semi-esterification treatment.

As described above, the alkylene oxide treatment is a treatment in which the chemically modified cellulose, obtained by subjecting the cellulose to the semi-esterification treatment, and an alkylene oxide are reacted. With the alkylene oxide treatment, the hydrogen atom of the hydroxyl group remaining in the cellulose after the semi-esterification treatment is substituted (chemically modified) with a hydrophobic group, and thus a chemically modified cellulose having higher hydrophobicity is obtained.

The method of the alkylene oxide treatment is not particularly limited, and a method of mixing a reaction mixture obtained by the semi-esterification treatment with an alkylene oxide can be used. At that time, if necessary, a catalyst or a medium may be used, and stirring or kneading may be performed.

In order to promote the reaction, the reaction temperature in the alkylene oxide treatment is preferably 20°C or higher, more preferably 40°C or higher, and still more preferably 60°C or higher. In addition, from the viewpoint of thermal degradation of the cellulose, the reaction temperature is preferably 180°C or lower, more preferably 160°C or lower, and still more preferably 150°C or lower.

The reaction time in the alkylene oxide treatment can be appropriately selected depending on the type and amount of the alkylene oxide, the reaction temperature, and the like, and is preferably 10 minute or longer, preferably 20 minutes or longer, and more preferably 30 minutes or longer, in order to fully introduce hydrophobic groups into the hydroxyl groups remaining in the chemically modified cellulose. In addition, from the viewpoint of production efficiency, the reaction time is preferably 6 hours or shorter, preferably 5 hours or shorter, and more preferably 4 hours or shorter.

The amount of the alkylene oxide to be used in the alkylene oxide treatment can be selected as appropriate. The amount is, for example, preferably 2.5 parts by mass or more, more preferably 5 parts by mass or more, still more preferably 7.5 parts by mass or more, even more preferably 10 parts by mass or more, particularly preferably 12.5 parts by mass or more, and most preferably 15 parts by mass or more with respect to 100 parts by mass of the cellulose, from the viewpoint of efficiency and cost of the alkylene oxide treatment. In addition, the upper limit of the amount is preferably 50 parts by mass or less from the viewpoint of cost.

The temperature in the alkylene oxide treatment can be selected as appropriate, and is, for example, preferably 120°C or higher, more preferably 125°C or higher, still more preferably 130°C or higher, even more preferably 135°C or higher and particularly preferably 145°C or higher, from the viewpoint of the reaction treatment rate. In addition, the temperature is preferably 200°C or lower from the viewpoint of deterioration of the cellulose.

The chemically modified cellulose obtained by the semi-esterification treatment and then the alkylene oxide treatment as necessary may be washed by a common method such as centrifugation, filtration, concentration, or extraction after completion of the reaction. For example, a medium may be added to the reaction mixture and the product may be washed by a separation method such as centrifugation, filtration, or extraction. Examples of the medium include water, ketones such as acetone, and alcohols such as ethanol and isopropanol.

### <Dispersing Step>

The dispersing step is a step of subjecting a composition containing the chemically modified cellulose in an amount of 0.01 wt% to 30 wt%, the surfactant in an amount of 0.01 wt% to 20 wt%, and the dispersion medium in an amount of 50 wt% to 99.8 wt% to a defibration treatment.

The defibration treatment is a treatment in which the chemically modified cellulose is defibrated and dispersed in the dispersion medium.

The chemically modified cellulose is defibrated by the semi-esterification treatment, but micron-sized fibers remain in part of the cellulose. Therefore, in the dispersing step, a composition obtained by mixing the chemically modified cellulose, a specific dispersion medium, and a specific surfactant in a predetermined ratio is subjected to the defibration treatment, so that a cellulose nanofiber dispersion in which the chemically modified cellulose having a nano-sized fiber diameter is uniformly dispersed is obtained.

The defibration treatment can be performed by stirring or kneading.

A cellulose dispersion is produced by adding 0.01 wt% to 30 wt% of a surfactant to a solution containing the chemically modified cellulose obtained by the semi-esterification treatment and then the alkylene oxide treatment, if necessary. The obtained cellulose dispersion is stirred or kneaded with a stone-mill defibration treatment device which is a defibration treatment device, a ball mill, a high-pressure homogenizer, a twin-screw extruder, and a short-screw extruder, and thus the CeNF dispersion is obtained.

### [Cellulose Nanofiber Composite Resin]

The cellulose nanofiber composite resin according to the embodiment of the present invention contains: a chemically modified cellulose contained in the cellulose nanofiber dispersion according to the embodiment of the present invention; and
at least one resin selected from a polyolefin resin, a polyvinyl resin, a polyamide resin, a polyester resin, and a biodegradable resin, wherein
a content of the chemically modified cellulose in the cellulose nanofiber composite resin is 40 wt% or less.

The above description can be applied to the cellulose nanofiber dispersion and the chemically modified cellulose according to the embodiment of the present invention.

Examples of the polyolefin resin include polyethylene, polypropylene, high density polyethylene (HDPE), ultra high molecular weight polyethylene (UHMWPE), and ethylene propylene copolymer resins.

Examples of the polyvinyl resin include vinyl acetate (EVA), polyvinyl alcohol (PVA), a vinyl alcohol-ethylene copolymer (EVOH), polyvinylidene chloride (PVDC), polyvinyl chloride (PVC), a vinyl chloride-vinylidene chloride copolymer, and a vinylidene chloride-methyl acrylate copolymer.

Examples of the polyamide resin include acrylic resins such as methyl poly(meth)acrylate and ethyl poly(meth)acrylate, styrene resins such as polystyrene, and nylon 6 or nylon 66.

Examples of the polyester resin include polyethylene terephthalate, polyethylene naphthalate, and polybutylene terephthalate.

Examples of the biodegradable resin include polymers containing polysaccharide and starch.

The content of the cellulose nanofiber in the cellulose nanofiber composite resin is preferably 30 wt% or less, and more preferably 20 wt% or less, from the viewpoint of production cost. In addition, the content of the cellulose nanofiber is preferably 1 wt% or more, and more preferably 3 wt% or more, from the viewpoint of ensuring the strength of the cellulose nanofiber composite resin.

The cellulose nanofiber composite resin according to the embodiment of the present invention may contain various additives such as an antioxidant, if necessary, in addition to the cellulose nanofiber and the above resins.

The use of the cellulose nanofiber composite resin according to the embodiment of the present invention is not particularly limited. For example, it can be used after being formed into a pellet, a sheet, or a film. For example, the cellulose nanofiber composite resin can be applied to a non-aqueous secondary battery separator or a high barrier film. Among these, in order to improve the safety of the battery, the cellulose nanofiber composite resin is also suitable for use in a non-aqueous secondary battery separator, which particularly requires improvements in heat resistance and strength properties.

The cellulose nanofiber composite resin according to the embodiment of the present invention is preferably produced by the following production method.

### [Method for Producing Cellulose Nanofiber Composite Resin]

The method for producing the cellulose nanofiber composite resin according to the embodiment of the present invention includes: a step of coating or kneading the cellulose nanofiber dispersion onto a surface of at least one resin selected from a polyolefin resin, a polyvinyl resin, a polyamide resin, a polyester resin, and a biodegradable resin; and a step of removing the dispersion medium by devolatilization or degreasing, in which
a content of the cellulose nanofiber in the cellulose nanofiber composite resin is 40 wt% or less.

The above description can be applied to the cellulose nanofiber dispersion and the chemically modified cellulose according to the embodiment of the present invention.

With the above kneading step, the CeNF dispersion is mixed with the resin such as polyolefin, and the resin is melted and/or kneaded in a device such as a twin-screw extruder, and then molded using ancillary equipment, so that strands (pellets) or sheets can be obtained.

In addition, the step of coating the cellulose nanofiber dispersion onto the surface of the resin, such as polyolefin, can be performed by a coater device, or by means of spraying.

The step of removing the dispersion medium by devolatilization or degreasing is performed by a method of passing the films, sheets, or strands obtained by the kneading step through an organic solvent such as methylene chloride. The dispersion medium in the organic solvent for degreasing has its degreasing ability decreased when the amount of the above films or strands passing therethrough increases. Therefore, ancillary equipment such as a fractionator for the used organic solvent is included.

The content of the cellulose nanofiber in the method for producing the cellulose nanofiber composite resin is preferably 30 wt% or less, and more preferably 20 wt% or less, from the viewpoint of production cost. In addition, the content of the cellulose nanofiber is preferably 1 wt% or more, and more preferably 3 wt% or more, from the viewpoint of ensuring the strength of the cellulose nanofiber composite resin.

### Examples

Hereinafter, preferred embodiments of the cellulose nanofiber dispersion and the cellulose nanofiber composite resin according to the present invention will be described with reference to the drawings.

Hereinafter, examples of characteristic results of a separator produced using the dispersion obtained by the present invention will be described. Physical property values obtained by the present invention are values obtained by the following methods. Table 1 shows cellulose nanofiber dispersions of Examples 1 to 6 and Comparative Examples 1 to 7 in the present invention.

**[Table 1]**

| | PE* | Liquid paraffin | Surfactant | | | CeNF | | Amount (wt%) of CeNF added | Amount (wt%) of surfactant added | PE*: CeNF dispersion (mass ratio) |
|---|---|---|---|---|---|---|---|---|---|---|
| | | | Type | Surface tension (m·N/m) | Contact angle (°) | Semi-esterification treatment | Propylene oxide treatment | | | |
| Example 1 | 30s | P-350P | Lecithin | 2 | 22 | Yes | No | 1 | 0.2 | 30:70 |
| Example 2 | 30s | P-350P | Lecithin | 2 | 22 | Yes | Yes | 1 | 0.2 | 30:70 |
| Example 3 | 30s | P-350P | Lecithin | 2 | 22 | Yes | No | 30 | 0.2 | 30:70 |
| Example 4 | 30s | P-350P | Lecithin | 2 | 22 | Yes | Yes | 30 | 0.2 | 30:70 |
| Example 5 | 30s | P-350P | Lecithin | 2 | 22 | Yes | No | 1 | 20 | 30:70 |
| Example 6 | 30s | P-350P | Lecithin | 2 | 22 | Yes | Yes | 1 | 20 | 30:70 |
| Comparative Example 1 | 30s | P-350P | | | | Yes | No | 1 | 0 | 30:70 |
| Comparative Example 2 | 30s | P-350P | | | | Yes | Yes | 1 | 0 | 30:70 |
| Comparative Example 3 | 30s | P-350P | | | | | | 0 | 0 | 30:70 |
| Comparative Example 4 | 30s | P-350P | Lecithin | 2 | 22 | Yes | No | 35 | 0.2 | 30:70 |
| Comparative Example 5 | 30s | P-350P | Lecithin | 2 | 22 | Yes | Yes | 35 | 0.2 | 30:70 |
| Comparative Example 6 | 30s | P-350P | Lecithin | 2 | 22 | Yes | No | 1 | 25 | 30:70 |
| Comparative Example 7 | 30s | P-350P | Lecithin | 2 | 22 | Yes | Yes | 1 | 25 | 30:70 |

| | | | | | | | | | | |
|---|---|---|---|---|---|---|---|---|---|---|
| *: ultra high molecular weight polyethylene | | | | | | | | | | |

Piercing strength: A prepared sheet was cut into a 50 mm × 50 mm square, and the maximum load when a needle penetrated the sheet was measured using an automatic piercing strength meter (KES-FB3-AUTO manufactured by KATOH TEK. Co.). Piercing strength of 10 points was measured on the same sheet, and the average value was calculated.

Gurley value: A prepared sheet was cut into a 50 mm × 50 mm square, and measurement was performed using a Gurley type automatic measuring machine (manufactured by TESTING MACHINES INC). In this measurement, the time required for 100 cc of air defined by JISP8177 to pass through the sheet was taken as the Gurley value.

Surface observation: A prepared sheet was subjected to platinum deposition with a thickness of 0.3 nm using a vacuum deposition device (E-1045 manufactured by Hitachi High-Technologies Corporation). The surface of this sheet was observed using FE-SEM (SUPRA55VP manufactured by Carl Zeiss).

Porosity and film thickness: Regarding the film thickness, a prepared sheet was cut into a 50 × 50 mm square, 10 points on parts of the sheet were measured using a micrometer, and the average value was taken as the film thickness. The porosity was calculated based on the actual weight of the sheet and the theoretical weight calculated based on the density and volume.

Sedimentation rate: The sedimentation state of CeNF in the dispersion was observed over the time, and the sedimentation rate was calculated from the ratio between the initial height and the height at the time of measurement, and compared.

Defibration state: The defibration state of CeNF in the produced dispersion was observed with an optical microscope (Nikon).

Heat shrinkage rate: A prepared sheet was cut into a 50 × 50 mm square and left in a furnace at 120°C for 1 hour. The dimensions of this sheet were measured, and the shrinkage rate was calculated based on the dimensional difference between the above dimensions and the dimensions before being put into the furnace.

Surface tension: The surface tension was obtained in that a flat plate having a width of 60 mm and a thickness of 5 mm was immersed in a sample solution and the load when the flat plate was lifted from the solution was divided by the perimeter of the flat plate and the contact angle of the liquid. (Wilhelmy method)

Acid value of chemically modified cellulose: The measurement was performed in accordance with JIS K2501 "Acid titration evaluation method". First, 1 g of cellulose subjected to a chemical modification treatment was weighed into a 100 ml beaker, 10 ml of distilled water and 10 ml of acetone were added, and the mixture was stirred with a magnetic stirrer at 400 rpm for 10 minutes. The mixed solution was titrated with a 0.1N KOH-ethanol solution while being stirred at 200 rpm, and the acid value was measured.

### (Example 1)

13.5 wt% of succinic anhydride was added to CEOLUS FD101 (Asahi Kasei Chemicals Corp.) which is a crystalline cellulose raw material, and the two components were reacted by stirring for 15 minutes in a container heated to 130°C. Thereafter, the reaction product was washed with acetone to remove unreacted substances and dried to obtain a chemically modified cellulose subjected to a semi-esterification treatment.

1 wt% of the obtained chemically modified cellulose was added into liquid paraffin P-350P (MORESCO Corporation) to obtain a mixture. Next, to the obtained mixture, 0.2 wt% of lecithin, which is a surfactant derived from food and having little impact on the human body, was added, and the mixture was passed through, 10 times, a super mass collider (MKCA 6-2, manufactured by MASUKO SANGYO CO., LTD.), which is a grinder type defibration treatment device, so as to produce a CeNF dispersion. The liquid paraffin used had a kinematic viscosity at 40°C of 67.65 mm²/s, the lecithin had a surface tension of 2 mN/m, and a contact angle with water of 22°.

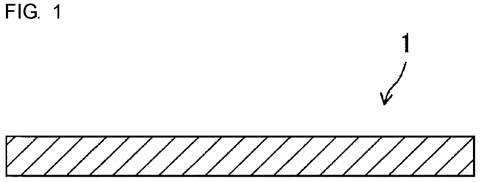

Next, an ultra high molecular weight polyethylene (Mitsui HI-ZEX MILLION 030S (Mitsui Chemicals, Inc.)) and the CeNF dispersion were melted and kneaded at a mass ratio of 30:70 in a kneader (manufactured by Brabender GmbH & Co. KG), and then a sheet in Fig. 1 having a thickness of 1 mm was formed by a press machine (SA-302-I manufactured by Tester Sangyo Co., Ltd.). The sheet was simultaneously biaxially stretched into a film 1 with a tabletop stretching device (manufactured by Toyo Seiki Co., Ltd.). Tables 2 and 3 show the kneading conditions and stretching conditions.

The obtained film 1 was immersed in methylene chloride while being fixed to a metal frame having a diameter of 100 mm, and the liquid paraffin in the film 1 was extracted. Thereafter, the film 1 was subjected to heat fixing at 120°C for 5 minutes while being fixed to the metal frame to remove the residual stress during stretching. The obtained film 1 was a microporous film.

**[Table 2]**

| Kneading conditions | | |
|---|---|---|
| Temperature | Rotational frequency | Kneading time |
| (°C) | (rpm) | (min) |
| 180 | 80 | 12 |

**[Table 3]**

| Stretching conditions | | | | | |
|---|---|---|---|---|---|
| MD stretching condition | | | TD stretching condition | | |
| Stretching Temperature | Stretching ratio | Stretching speed | Stretching Temperature | Stretching ratio | Stretching speed |
| (°C) | (times) | (mm/min) | (°C) | (times) | (mm/min) |
| 110 | 6 | 3000 | 110 | 7 | 3000 |

### (Example 2)

The cellulose subjected to the semi-esterification treatment in Example 1 was further subjected to a propylene oxide treatment. To 86.5 parts by mass of the CeNF dispersion subjected to the semi-esterification treatment in Example 1, 13.5 parts by mass of propylene oxide was added. The two components were charged into a pressure resistant container and reacted for 1 hour in an atmosphere of 140°C, to obtain a chemically modified cellulose subjected to a propylene oxide treatment. This chemically modified cellulose was subjected to the defibration treatment with the method shown in Example 1 and a dispersion was obtained. Thereafter, a sheet was formed by the method shown in Example 1.

### (Example 3)

30 wt% of the cellulose subjected to chemical modification in Example 1 was added to liquid paraffin and subjected to the defibration treatment to obtain a dispersion.

### (Example 4)

30 wt% of the cellulose subjected to chemical modification in Example 2 was added to liquid paraffin, and subjected to the defibration treatment to obtain a dispersion.

### (Example 5)

The amount of the surfactant added in the dispersion in Example 1 was replaced with 20 wt%. The above was charged into a defibration device, the CeNF was subjected to a defibration treatment, and a dispersion s was obtained.

### (Example 6)

The amount of the surfactant added in the dispersion in Example 2 was replaced with 20 wt%. The above was charged into a defibration device, the CeNF was subjected to a defibration treatment, and a dispersion was obtained.

### (Comparative Example 1)

A cellulose raw material was subjected to a semi-esterification treatment, a defibration treatment was performed without adding a surfactant and a dispersion was produced. Using this dispersion, a sheet was formed by the method shown in Example 1.

### (Comparative Example 2)

A cellulose raw material was subjected to a semi-esterification treatment and then subjected to a propylene oxide treatment, to produce a cellulose. Using this cellulose, a defibration treatment was performed without adding a surfactant, and dispersion was produced. Using this produced dispersion, a sheet was formed by the method shown in Example 1.

### (Comparative Example 3)

Without adding a CeNF dispersion, liquid paraffin and ultra high molecular weight PE were formed into a sheet by the method shown in Example 1.

### (Comparative Example 4)

35 wt% of the cellulose subjected to chemical modification in Example 1 was added to liquid paraffin, and the defibration treatment was performed to obtain a dispersion

### (Comparative Example 5)

35 wt% of the cellulose subjected to chemical modification in Example 2 was added to liquid paraffin, and the defibration treatment was performed to obtain a dispersion.

### (Comparative Example 6)

The amount of the surfactant added in the dispersion in Example 1 was replaced with 25 wt%. The above was charged into a defibration device, a defibration treatment of CeNF was performed to obtain a dispersion.

### (Comparative Example 7)

The amount of the surfactant added in the dispersion in Example 2 was replaced with 25 wt%. The above was charged into a defibration device, a defibration treatment of CeNF was performed to obtain a dispersion.

### (Comparative Example 8)

45 wt% of the cellulose subjected to chemical modification in Examples 1 and 2 was added to liquid paraffin and the defibration treatment of Example 1 was performed to obtain a dispersion. Using this dispersion, a sheet was formed by the forming method described in Example 1.

### Result Comparison

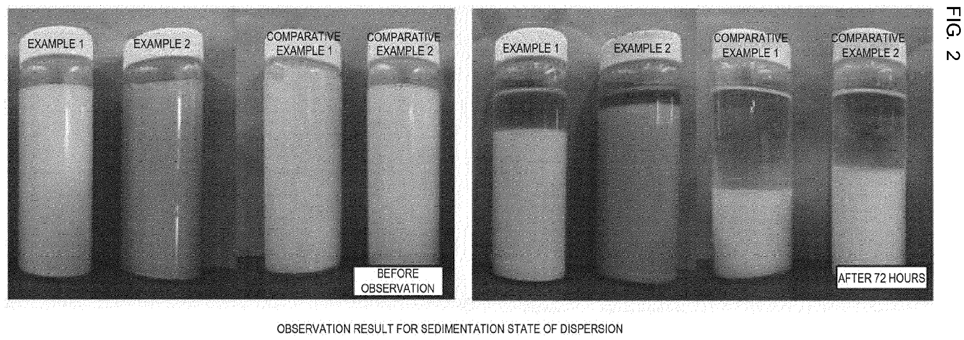

Fig. 2 shows sedimentation states of 50 ml of the dispersions produced in Examples 1 and 2 and Comparative Examples 1 and 2 after being allowed to stand for 72 hours. In the dispersions (Comparative Example 1 and Comparative Example 2) to which no surfactant was added, both had a sedimentation rate of 50% or more. On the other hand, in the dispersions (Examples 1 and 2) to which the surfactant was added, the sedimentation rate was 10% or less even after 72 hours, and it was confirmed that the dispersion could be maintained for a long time. The sedimentation rate was determined by the ratio of the height of the liquid level of the solution in the container to the height of CeNF that sedimented in the medium after 72 hours.

Fig. 2 shows sedimentation states of the dispersions produced in Examples 1 and 2 and Comparative Examples 1 and 2 after 72 hours.

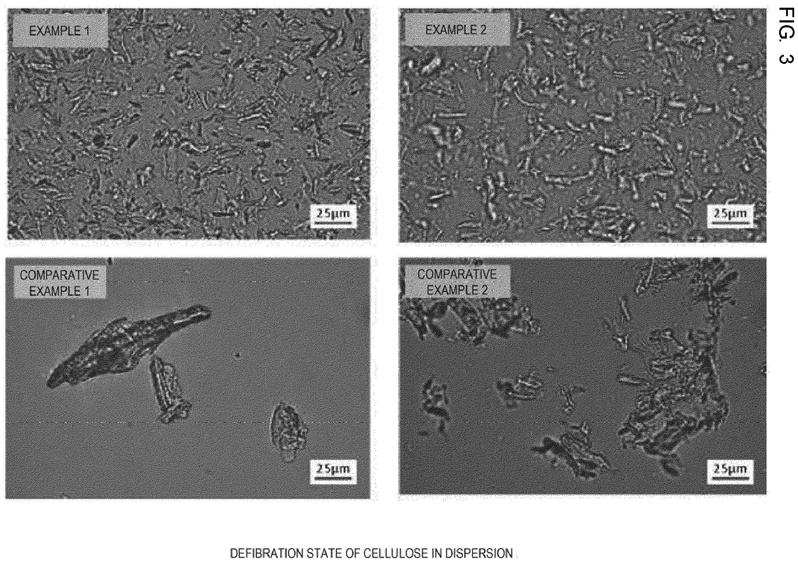

In Fig. 2 and Fig. 3, the improvements in the dispersion state and the defibration state were found on CeNF in the dispersion to which the surfactant was added. This is presumed to be the effect of the dispersing effect and permeation effect, which are the properties of the surfactant. Particularly, the permeation of the medium into the center of the cellulose raw material due to the permeation effect of the surfactant promotes the swelling, which is considered to facilitate defibration.

Fig. 3 shows SEM images of microporous films produced in Examples 1 and 2 and Comparative Examples 1 and 2. As a result of comparing the defibration states of CeNFs in the produced dispersions, CeNF having a coarse fiber diameter was partially confirmed for CeNFs in the dispersions (Comparative Example 1 and Comparative Example 2) to which no surfactant was added. On the other hand, in the dispersions (Example 1 and Example 2) to which the surfactant was added, it was confirmed that the defibration state of CeNF was in progress.

Table 4 below shows the characteristic values of the separators produced in Examples and Comparative Examples. It was found that samples to which CeNF was added tended to have better properties than samples to which no CeNF was added (Comparative Example 3). In addition, compared to Comparative Examples 1 and 2 to which no surfactant was added, it was found that Examples 1 and 2 to which the surfactant was added tended to have a low Gurley value, which affects the battery properties of the lithium ion battery, and a high porosity. Further, the piercing strength, indicating the strength during film breakage due to contamination of lithium ion dendrites caused by deterioration with time and foreign matters during battery production, was improved by 10% or more. Generally, in the separator, the greater the porosity, the greater the proportion of micropores as starting points for film rupture, so that the piercing strength decreases. Compared to the Comparative Examples, despite the high porosity, no decrease in piercing strength was observed in the Examples.

On the other hand, in Comparative Examples, despite the low porosity, the piercing strength was low. In any of the Examples, since the surfactant was added, it is considered that the dispersion state of CeNF was improved in the resin. In addition, Examples 3 and 4 in which 30 wt% of cellulose was added in liquid paraffin could be charged into the defibration treatment device. On the other hand, in Comparative Examples 4 and 5 in which 35 wt% of cellulose was added to liquid paraffin, the cellulose raw material was solidified, which was difficult to be supplied to the defibration treatment device. Further, in Examples 5 and 6 in which the amount of the surfactant added was 20 wt%, bubbles were generated to the extent that there was no hindrance to the liquid feeding pump. In contrast, in Comparative Examples 6 and 7 in which the amount of the surfactant added was 25 wt%, it was confirmed that a large amount of bubbles was generated and it was difficult to feed the solution with a liquid feeding pump.

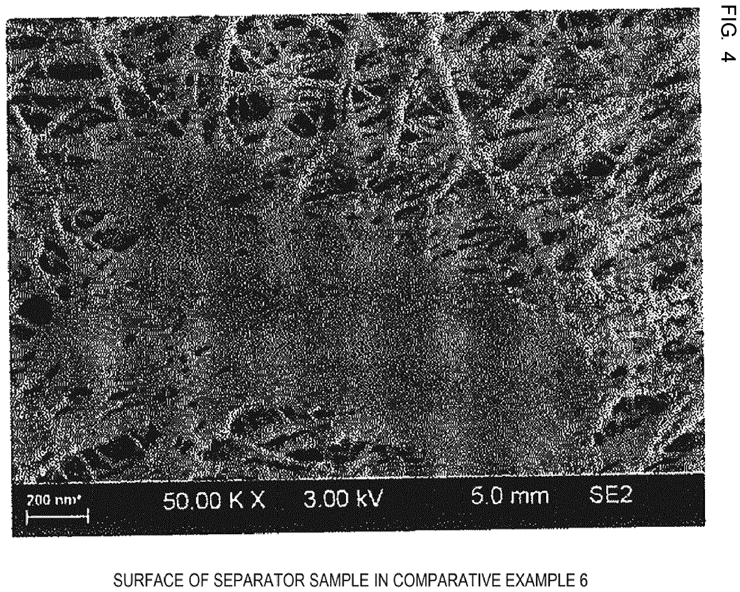

In Comparative Example 8, 10 wt% of the CeNF was added and a sheet was formed. As a result, the film was broken in the stretching step, and the properties could not be evaluated. Since CeNF having a coarse fiber diameter as shown in Fig. 4 is found on the surface of the separator of Comparative Example 6, it is presumed that the film is broken starting from this site.

From the above, it was shown that by adding a surfactant, a dispersion with an improved defibration state and dispersion state was obtained, and the separator properties were improved.

**[Table 4]**

| Representative property values of separator | | | | | |
|---|---|---|---|---|---|
| | Example 1 | Example 2 | Comparative Example 1 | Comparative Example 2 | Comparative Example 3 |
| Thickness [µm] | 13.1 | 12.2 | 13.7 | 10.7 | 11.2 |
| Gurley value [sec/100 cc] | 365.2 | 320.2 | 388.5 | 380.5 | 442.7 |
| Porosity [%] | 32 | 34 | 33.2 | 34.5 | 30.4 |
| Piercing strength [gf] | 523.9 | 547.5 | 474.9 | 475.3 | 436.2 |

Above, Table 1 summarizes the raw materials used and ratios in the Examples and Comparative Examples; Table 2 shows the kneading conditions in the Examples and Comparative Examples; Table 3 shows stretching conditions in the Examples and Comparative Examples; and Table 4 shows physical property values of separators produced in the Examples and Comparative Examples.

### Industrial Applicability

In the cellulose nanofiber dispersion and the cellulose nanofiber composite resin according to the present invention, with the compounding of the resin and the cellulose nanofiber dispersion, the strength properties and heat resistance of the resin can be improved, the strength and heat resistance of various resin products can be improved, and the performance of the LIB separator can also be improved.

Although the present invention has been described in detail with reference to the specific embodiment, it will be apparent to those skilled in the art that various changes and modifications can be made without departing from the spirit and scope of the present invention.

The present application is based on a Japanese Patent Application (2017-169271) filed on September 4, 2017, contents of which are incorporated herein by reference.

### Reference Signs List

- 1: film

## Claims

1. A cellulose nanofiber dispersion comprising: a chemically modified cellulose in an amount of 0.01 wt% to 30 wt%; a surfactant in an amount of 0.01 wt% to 20 wt%; and a dispersion medium in an amount of 50 wt% to 99.8 wt%, wherein
the chemically modified cellulose is a finely powdered and chemically modified cellulose subjected to a semi-esterification treatment, in which a hydroxyl group contained in the cellulose is modified with a dibasic acid anhydride, and
the surfactant is at least one selected from surfactants having a surface tension of 70 m·N/m or less measured by a Wilhelmy method and a contact angle between a droplet and a solid surface of 90° or less.

2. The cellulose nanofiber dispersion according to claim 1, wherein the chemically modified cellulose is further subjected to an alkylene oxide treatment.

3. The cellulose nanofiber dispersion according to claim 1 or 2, wherein the chemically modified cellulose has an average fiber diameter of 3 nm to 200 nm.

4. The cellulose nanofiber dispersion according to any one of claims 1 to 3, wherein the dispersion medium is tap water containing calcium in an amount of 1 mg/l to 400 mg/l and magnesium in an amount of 1 mg/l to 400 mg/l and having a pH of 4 to 8, or pure water.

5. The cellulose nanofiber dispersion according to any one of claims 1 to 3, wherein the dispersion medium is an organic solvent having a molecular weight of 30 to 100 and a boiling point of 50°C to 300°C.

6. The cellulose nanofiber dispersion according to any one of claims 1 to 3, wherein the dispersion medium is an oil having a viscosity of 2,000,000 mPa·s or less.

7. A method for producing a cellulose nanofiber dispersion, comprising:
a step of obtaining a chemically modified cellulose by subjecting a cellulose to a semi-esterification treatment; and
a dispersing step of subjecting a composition containing the chemically modified cellulose in an amount of 0.01 wt% to 30 wt%, a surfactant in an amount of 0.01 wt% to 20 wt%, and a dispersion medium in an amount of 50 wt% to 99.8 wt% to a defibration treatment, wherein
the cellulose has an average fiber diameter of 20 µm to 70 µm, and
the surfactant is at least one selected from surfactants having a surface tension of 70 m·N/m or less measured by a Wilhelmy method and a contact angle between a droplet and a solid surface of 90° or less.

8. A cellulose nanofiber composite resin, comprising:
the chemically modified cellulose contained in the cellulose nanofiber dispersion according to any one of claims 1 to 6; and
at least one resin selected from a polyolefin resin, a polyvinyl resin, a polyamide resin, a polyester resin, and a biodegradable resin, wherein
a content of the chemically modified cellulose is 40 wt% or less.

9. A method for producing a cellulose nanofiber composite resin, comprising:
a step of coating or kneading the cellulose nanofiber dispersion according to any one of claims 1 to 6 onto a surface of at least one resin selected from a polyolefin resin, a polyvinyl resin, a polyamide resin, a polyester resin, and a biodegradable resin; and
a step of removing the dispersion medium by devolatilization or degreasing, wherein
a content of the chemically modified cellulose is 40 wt% or less.
